# EUROPEAN PATENT APPLICATION

(11) **EP 4 768 148 A1**
(43) Date of publication of application: **01.07.2026**
(21) Application number: 24913480.0
(22) Date of filing: 28.11.2024
(51) Int. Cl.: B21D 51/26, B21D 51/46, B21D 51/10, H01M 10/643

(54) **ROTARY CAN BEADING APPARATUS**

(30) Priority: 26.12.2023 KR 20230191943
(71) Applicant: LG ENERGY SOLUTION, LTD., Seoul 07335 (KR)
(72) Inventor: CHO, Haeyoun, 34122 Seoul (KR); KIM, Taeheon, 34122 Seoul (KR); KIM, Daehyun, 34122 Seoul (KR); NOH, Yunji, 34122 Seoul (KR)
(74) Representative: Goddar, Heinz J.
(86) International application number: PCT/KR2024/019193
(87) International publication number: WO 2025/143587

(57) **Abstract**

Provided is a rotary-type can beading apparatus capable of automatically correcting the height of a head. The rotary-type can beading apparatus comprises: a rotary; a plurality of arms which are arranged along the circumference of the rotary so as to rotate along with the rotary, and which extend in the radial direction; a head which is rotatably installed on each of the arms and is installed so as to be slidable in the axial direction; a beading knife which is installed on each of the arms so as to be movable in the direction moving close toward the rotation axis or moving away therefrom; a support roller which is arranged so as to face the beading knife with the rotation axis therebetween; a first rail cam which is provided with a first height profile extending in the circumferential direction with respect to the central axis; and a first cam follower which is raised along with the head and adjusts the height of the head by following the first height profile. The height of the first rail cam is adjusted by the operation of a first servo motor.

## Description

### [TECHNICAL FIELD]

This application claims the benefit of priority based on Korean Patent Application No. 10-2023-0191943 filed on December 26, 2023, entire content disclosed in the document of the patent applications is included as a part of this specification.

The present invention relates to a can beading apparatus, and specifically, to a rotary can beading apparatus capable of automatic head height calibration.

### [BACKGROUND ART]

A rotary can beading apparatus forms beadings around the open end of a sidewall member of a cylindrical can while the can pivots around a rotary axis. The beadings are processed after accommodating an electrode assembly in the can to fix the electrode assembly accommodated in the can.

While this rotary can beading apparatus offers fast processing speeds, precise controls of the height of the can, the height of the head supporting the open end of the sidewall member of the can and the position of the beading knife in the radial direction of the can are required during rotation.

However, conventional methods, such as those described in Korean Patent Publication No. 2023-0038848, required manual adjustment of the head height, which inevitably necessitated lengthy verification times. It takes a considerable amount of time for a skilled worker to set and verify the head height. In situations where a skilled worker is absent, calibration and maintenance inevitably require even more time. This leads to reduced production efficiency.

### [DISCLOSURE]

### [TECHNICAL PROBLEM]

In order to solve a the above-described problems, it is an object of the present invention to provide a rotary beading apparatus capable of precisely and automatically calibrating the head alignment during the rotary beading process to enable quick and accurate calibration and management of the rotary beading apparatus.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

The present invention may be applied to a rotary can beading apparatus including: a rotary rotating about a center axis; a plurality of arms arranged along a circumference of the rotary and extending in radial direction, the plurality of arms rotating with the rotary; a head rotatably installed about a rotary axis at each of the plurality of arms and slidable in axial direction; a first rail cam having a first height profile extending in circumferential direction with respect to the center axis; and a first cam follower moving up and down together with the head and following the first height profile to adjust the height of the head .

The rotary can beading apparatus may further include: a plurality of can tables arranged along the circumference of the rotary so as to rotate together with the rotary and extending in radial direction; a can support provided at an outer circumference of each of the plurality of can tables so as to rotate together with the plurality of can tables and installed rotatably about the rotary axis with respect to the plurality of can tables; a second rail cam having a second height profile extending in circumferential direction with respect to the center axis; and a second cam follower moving up and down together with the can support and following the second height profile to adjust the height of the can support.

The rotary can beading apparatus may further include: a beading knife installed at each of the plurality of arms so as to be movable toward or away from the rotary axis; a third rail cam having a first radial direction profile extending in circumferential direction with respect to the center axis; and a third cam follower moving in radial direction with respect to the rotary axis together with the beading knife and following the first radial direction profile to adjust a radial distance of the beading knife with respect to the rotary axis of the head .

The rotary can beading apparatus may further include: a support roller disposed opposite the beading knife with the rotary axis interposed therebetween; a fourth rail cam having a second radial direction profile extending in circumferential direction with respect to the center axis; and a fourth cam follower moving in radial direction with respect to the rotary axis together with the support roller and following the second radial direction profile to adjust a radial distance of the support roller with respect to the rotary axis of the head .

The rotary can beading apparatus may include a first rail extending in circumferential direction with respect to the center axis, and a first roller moving up and down together with the head and following the first rail.

The height of the head in a first circumferential section may be determined by the first rail cam.

The height of the head in a second circumferential section that does not overlap with the first circumferential section may be determined by the first rail.

The rotary can beading apparatus may include a second rail extending in circumferential direction with respect to the center axis, and a second roller moving up and down together with the can support and following the second rail.

The height of the can table in a third circumferential section may be determined by the second rail cam. The height of the can table in a fourth circumferential section that does not overlap with the third circumferential section may be determined by the first rail.

In order to solve a the above-described problems, the height of the first rail cam is adjusted by operating the first servo motor in the rotary can beading apparatus of the present invention.

The elevation direction of the first rail cam may be determined by the rotational direction of the first servo motor, and the elevation height of the first rail cam may be determined by the number of rotations of the first servo motor.

The rotary can beading apparatus may further include a monitoring unit acquiring height information of the head.

The rotational direction and the number of rotations of the first servo motor may be determined based on height information of the head acquired by the monitoring unit.

The first rail cam may be installed at a first frame to be vertically movable, and the first servo motor may be installed at the first frame.

The first rail cam and the first servo motor are installed on the same part so as to enable accurate height calibration of the first rail cam.

The first frame may include a first rail elevating guide guiding an elevation of the first rail cam. The first rail cam may be restricted from moving radially and circumferentially with respect to the first rail elevating guide while being permitted to move up and down.

The first servo motor may rotate a ball screw at a controlled number of rotations, and a slider in a form of a ball nut coupled to the ball screw may move forward and backward along the lengthwise direction of the ball screw in conjunction with upward and downward motions of the first rail cam.

The slider and the first rail cam may be provided with a pair of sliding inclined surfaces having vertically varying heights with respect to the lengthwise direction of the ball screw, and forward and backward motions may be in conjunction with the upward and downward motions as the pair of sliding inclined surfaces slide.

To address the above-described problem, the rotary can beading apparatus of the present invention allows the height of the second rail cam to be adjusted by the operation of a second servo motor.

The elevation direction of the second rail cam may be determined by the rotational direction of the second servo motor, and the elevation height of the second rail cam may be determined by the number of rotations of the second servo motor.

The rotational direction and the number of rotations of the second servo motor may correspond to or may be complementary to the rotational direction and the number of rotations of the first servo motor, respectively.

The second rail cam may be installed at a second frame to be vertically movable, and the second servo motor may be installed at the second frame.

The second rail cam and the second servo motor are installed on the same part so as to enable accurate height calibration of the second rail cam.

The second frame may include a second rail elevating guide guiding an elevation of the second rail cam. The second rail cam may be restricted from moving radially and circumferentially with respect to the second rail elevating guide while being permitted to move up and down.

The second servo motor may rotate a ball screw at a controlled number of rotations, and a slider in a form of a ball nut coupled to the ball screw may move forward and backward along the lengthwise direction of the ball screw in conjunction with upward and downward motions of the second rail cam.

The slider and the second rail cam may be provided with a pair of sliding inclined surfaces having vertically varying heights with respect to the lengthwise direction of the ball screw, and forward and backward motions may be in conjunction with the upward and downward motions as the pair of sliding inclined surfaces slide.

The relative height with respect to the head of the first cam follower may be adjusted by a rotation of an adjustment shaft, wherein the relative height changes depending on a rotation angle of the adjustment shaft.

The rotation of the adjustment shaft may be locked or unlock by a locking controller.

The rotation angle of the adjustment shaft may be adjusted by a third servo motor mounted so as to be accessible and retractable relative to the adjustment shaft.

The locking controller may include: a locking nut locking or unlocking the adjustment shaft depending on a rotational direction; and a nut runner installed so as to be accessible and retractable with respect to the locking nut to rotate the locking nut.

Accordingly, the locking and unlocking operation of the locking nut may be automated by the nut runner, and the adjustment shaft may be precisely adjusted by precisely controlling the rotational direction and the number of rotations of the third servo motor.

That is, with the locking nut unlocked by the nut runner, the third servo motor may control the adjustment shaft, thereby adjusting the position of the first cam follower to adjust the head height.

The third servo motor, the nut runner and the monitoring unit may all be installed at the first frame.

The head requiring height adjustment is moved to the third servo motor and nut runner by rotating the rotary, and then calibration may be performed.

Once the calibration is complete, the can may be molded and data trends may be analyzed using a measuring instrument.

### [ADVANTAGEOUS EFFECTS]

According to the present invention, the height of all heads in a rotary can beading apparatus may be automatically and precisely adjusted and calibrated using a first servo motor. The height of all can supports may be automatically and precisely adjusted and calibrated using a second servo motor. The height of individual heads may be automatically and precisely adjusted and calibrated using a third servo motor.

According to the present invention, product quality may be ensured in real time. Even when quality problem occurs, automatic and precise calibration is possible immediately, thereby increasing productivity.

According to the present invention, the height of individual head may also be automatically and precisely adjusted such that immediate action on individual heads requiring calibration is possible and the defect rate may be further lowered by analyzing data trend.

In addition to the advantageous effects described above, specific effects of the present invention will be described further while describing specific details of the present invention.

### [BRIEF DESCRIPTION OF DRAWINGS]

FIGS. 1 and 2 are top perspective views and front views of the rotary can beading apparatus according to an embodiment.
FIG. 3 is a top perspective view of the rotary can beading apparatus of FIG. 1 without the upper frame.
FIG. 4 is a bottom perspective view of the upper frame of the rotary can beading apparatus of FIG. 1.
FIG. 5 is a bottom perspective view of the rotary can beading apparatus of FIG. 1 without the lower frame.
FIG. 6 is a top perspective view of the lower frame of the rotary can beading apparatus of FIG. 1.
FIG. 7 is a top perspective view of the lower frame and the rotary of the rotary can beading apparatus of FIG. 1.
FIG. 8 is a front cross-sectional view of the upper frame, the lower frame and the rotary.
FIG. 9 is a front cross-sectional view illustrating a can being supplied to the rotary can beading apparatus.
FIG. 10 is a front cross-sectional view illustrating a can being beaded in the rotary can beading apparatus.
FIG. 11 is an enlarged cross-sectional view of the head, knife and support roller of the rotary can beading apparatus according to the embodiment.
FIG. 12 is a cross-sectional perspective view of the spindle.
FIG. 13 is a cross-sectional perspective view of the spindle of FIG. 12 without the shaft.
FIG. 14 is an enlarged cross-sectional view of the automatic calibration equipment for adjusting the height of all heads and the automatic calibration equipment for adjusting the height of individual heads.
FIG. 15 is an enlarged cross-sectional view of the automatic calibration equipment for adjusting the height of all can supports.
FIGS. 16 through 19 sequentially illustrate the individual head height adjustment process.
FIGS. 20 and 21 are exploded and assembled perspective views of the individual head height adjustment structure according to the embodiment.
FIG. 22 is a perspective view of the individual head of FIG. 21 with the height thereof adjusted.

### [DESCRIPTION OF REFERENCE NUMERALS]

1: rotary can beading apparatus
2: can
10: rotary
101: center axis
12: outer rotary
121: table elevating guide
14: inner rotary
141: spindle drive support
143: spindle drive
145: drive motor
147: drive gear
16: support rotary
17: knife rail cam (third rail cam)
172: knife radial position profile
20: arm
21: spindle support
22: bearing
23: shaft elevating guide
24: shaft support member
25: knife movement guide
26: roller movement guide
30: spindle
301: rotary axis
31: housing
32: driven gear
33: sleeve
34: shaft
35: head cam follower (first cam follower)
351: adjustment shaft
352: locking controller
353: locking nut
354: eccentric shaft
37: head
39: head roller (first roller)
40: beading knife
41: knife support
42: knife support axis
43: knife cam follower (third cam follower)
50: support roller
51: roller support
52: roller support axis
53: support cam follower (fourth cam follower)
60: can table
61: can support
62: can cam follower (second cam follower)
63: can roller (second roller)
70: upper frame (first frame)
71: upper rail cam (first rail cam)
72: upper rail elevating guide (first rail elevating guide)
73: upper servo motor (first servo motor)
731: ball screw (first ball screw)
74: slider
741: sliding inclined surface
75: adjusting servo motor (third servo motor)
76: nut runner
77: upper rail (first rail)
79: monitoring unit
80: lower frame (second frame)
81: lower rail cam (second rail cam)
82: lower rail elevating guide (second rail elevating guide)
83: lower servo motor (second servo motor)
831: ball screw (second ball screw)
84: slider
85: lower rail (second rail)
86: middle table
87: support rail cam (fourth rail cam)
871: support roller radial position profile

### [DETAILED DESCRIPTION OF THE PREFERRED EMBODIMENTS]

Hereinafter, preferred embodiments of the present invention will be described with reference to the accompanying drawings.

The present invention is not limited to the embodiments disclosed hereinafter, and various changes may be applied and may be implemented in various different forms. The embodiments herein are only provided to complete the disclosure of the present invention and to fully inform those skilled in the art of the scope of the invention. Therefore, the present invention is not limited to the embodiments disclosed hereinafter, and it should be understood that the present invention includes all changes and equivalents encompassed in the technical spirit and scope of the present invention as well as substitution or addition of a configuration of one embodiment with that of another embodiment.

The accompanying drawings are only for facilitating understanding of the embodiments disclosed herein, and it should be understood that the technical idea disclosed herein is not limited by the accompanying drawings, and that encompasses all changes, equivalents and substitutions of the spirit and technical scope of the present invention. In the accompanying drawings, while components may be exaggeratedly large or small in size or thickness to facilitate understanding, etc., this should not construe the scope of protection of the present invention as being limited.

Terms used herein are only used to describe specific embodiments or examples, and are not intended to limit the present invention. In addition, the expressions in singular form include expressions in plural form unless the context clearly dictates otherwise. Herein, terms such as "comprise" and "consist of" are intended to designate that features, numbers, steps, operations, components, parts, or combinations thereof described in the specification exist. That is, it should be understood that terms such as "comprise", "consist of' used herein should not preclude the possibility of the presence or addition of one or more other features, numbers, steps, operations, components, parts, or combinations thereof.

While terms including ordinal numbers such as "first" and "second" may be used to describe various components, the components are not limited by the terms. The terms are only used for the purpose of distinguishing one component from another.

It should be understood that when an element is referred to as being "connected" to another element, the element may be directly connected to another element, or there may exist an interposing element in the middle. On the other hand, when an element is referred to as being "directly connected" to another element, it should be understood that there is no interposing element in the middle.

When an element is referred to as being "above" or "under" another element, it should be understood that there may exist an interposing elements in the middle as well as being directly above or under another element.

Unless defined otherwise, all terms used herein, including technical or scientific terms, have the same meaning as commonly understood by those skilled in the art to which the present invention belongs. Terms such as those defined in commonly used dictionaries should be interpreted as having a meaning consistent with the meaning in the context of the related art, and unless explicitly defined herein, terms such as those defined in commonly used dictionaries should not be interpreted in an ideal or excessively formal meaning.

Hereinafter, a rotary can beading apparatus 1 according to an embodiment of the present invention will be described.

In order to facilitate description, a center axis 101 is the center of rotation of the rotary 10, and a rotary axis 301 is the center of rotation of the head 37 orbiting around the rotary 10.

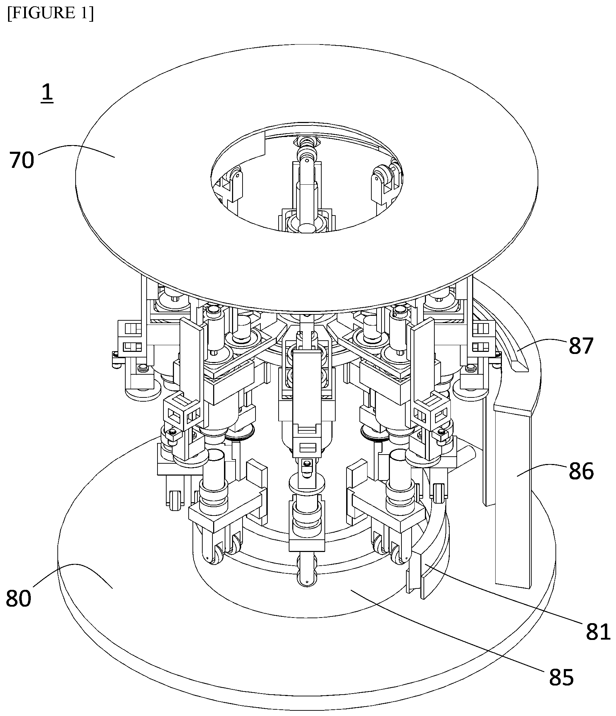

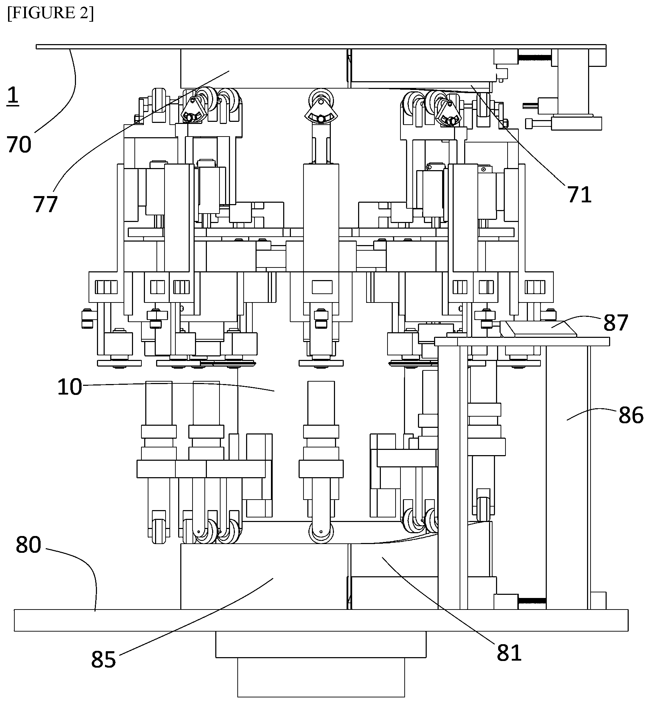

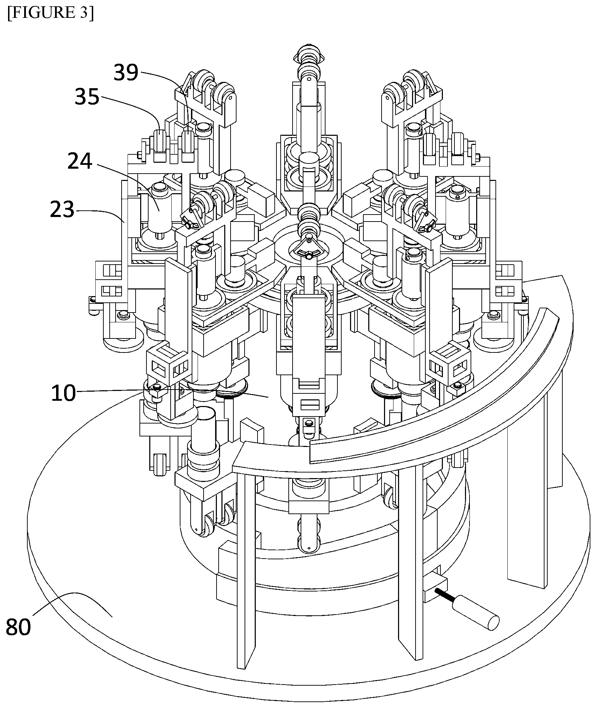

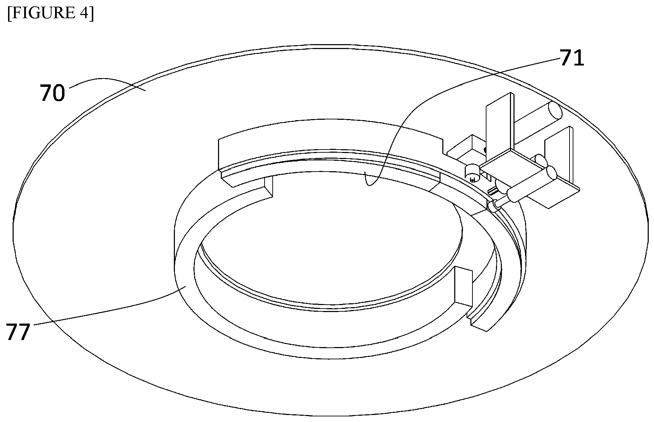

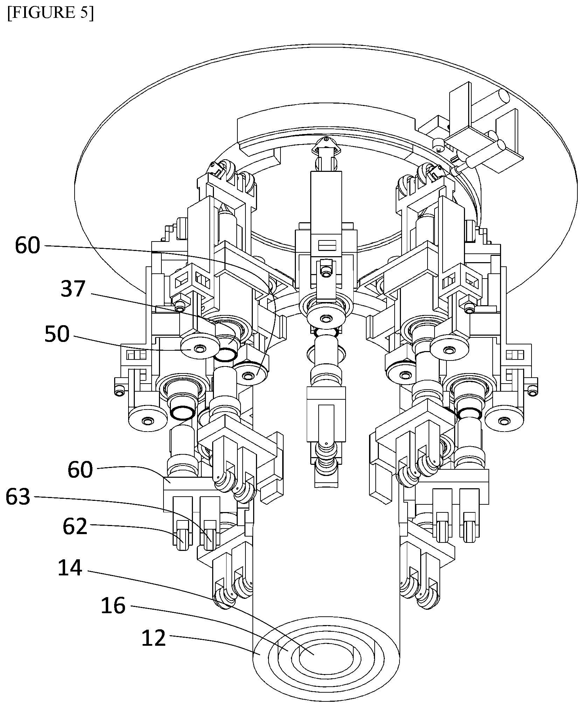

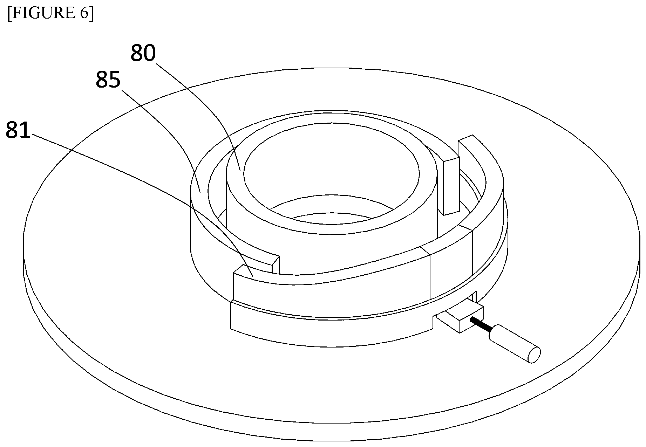

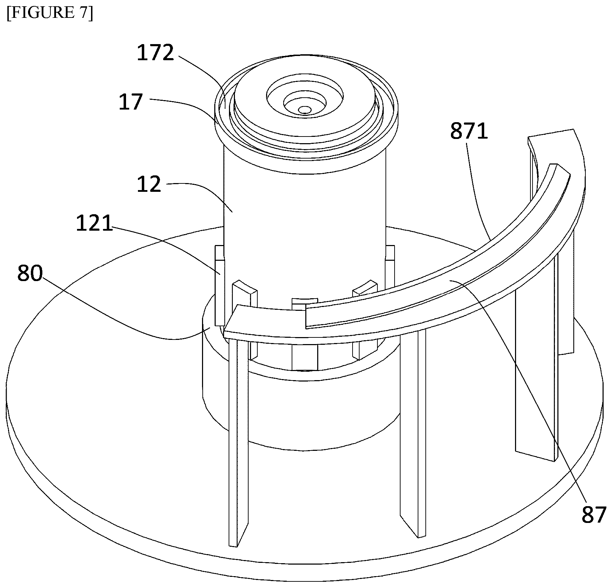

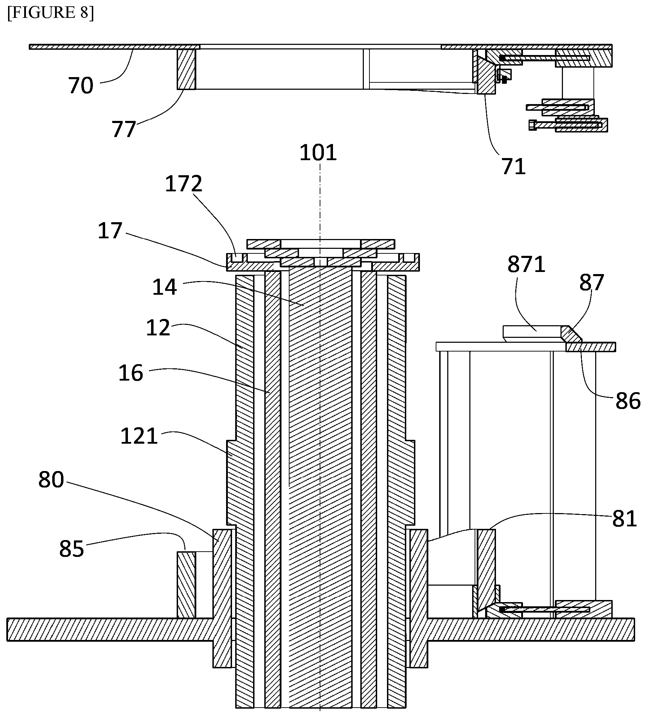

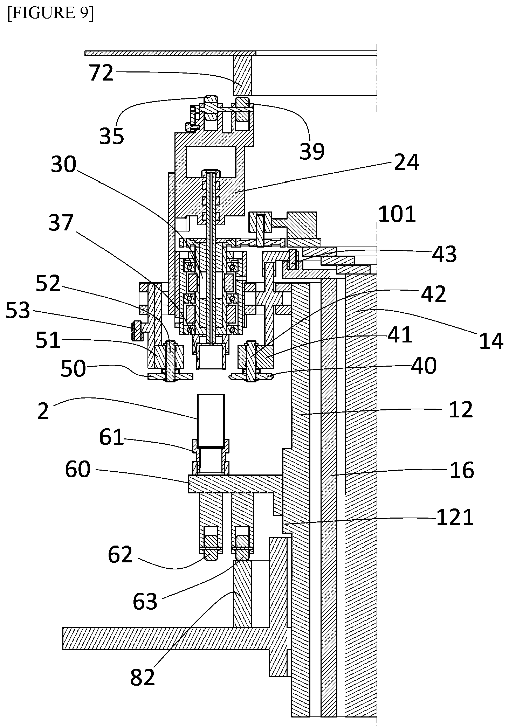

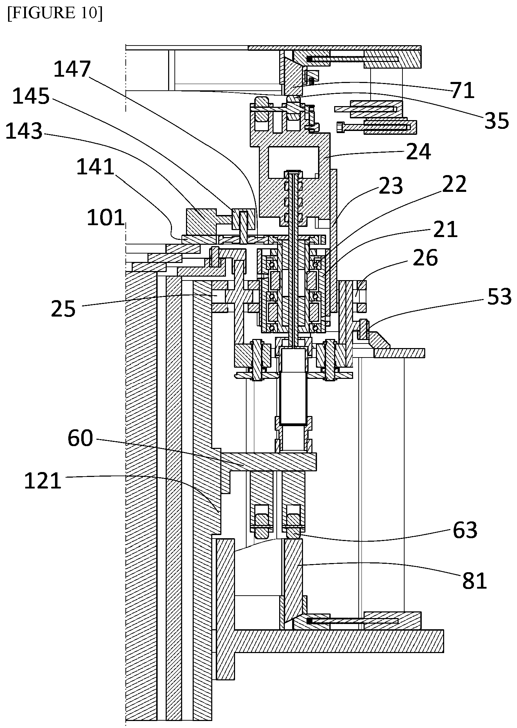

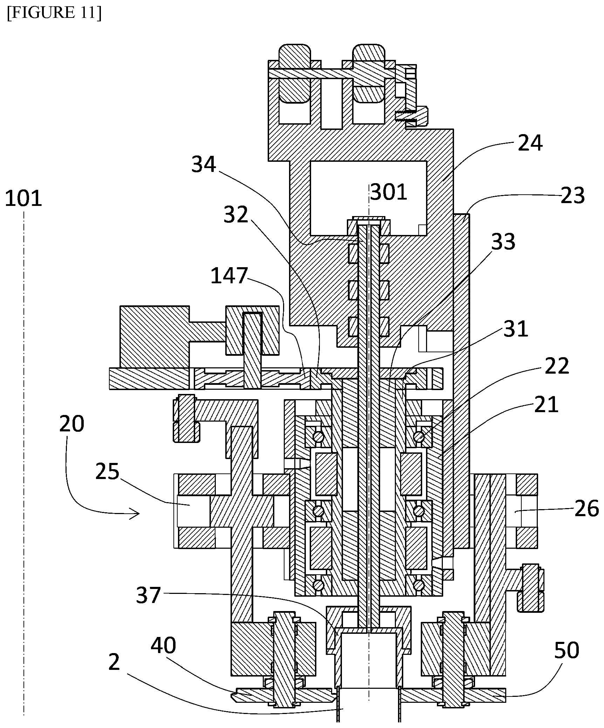

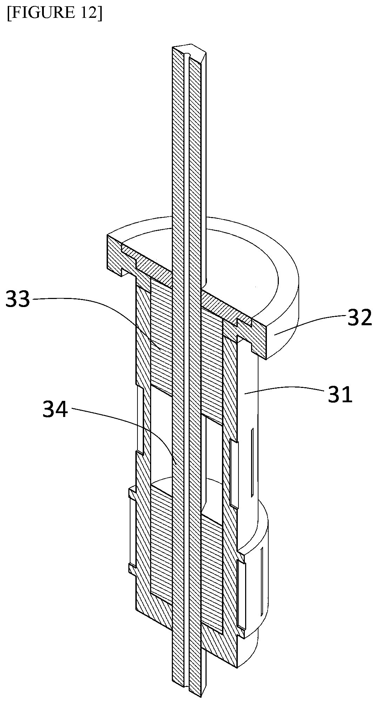

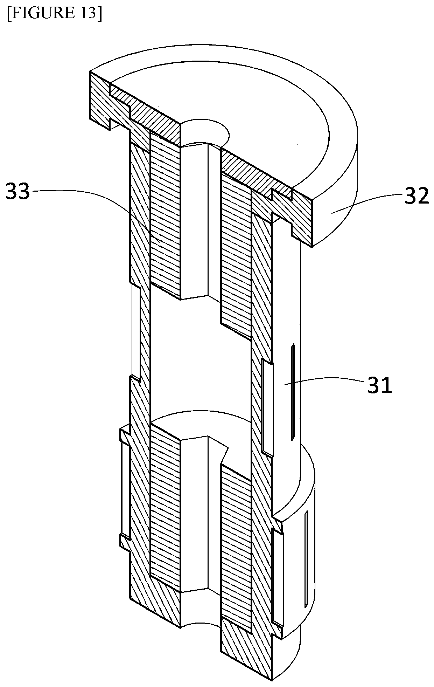

With reference to FIGS. 1 to 13, the overall structure will be described. The rotary can beading apparatus 1 includes the rotary 10 that rotates about the center axis 101.

The rotary 10 includes an outer rotary 12 and an inner rotary 14 that are concentric, and a support rotary 16 provided therebetween in radial direction. The outer rotary 12 and the inner rotary 14 may rotate at the same speed.

A lower frame 80 is installed around the lower portion of the rotary 10 to support the rotation of the rotary 10. The lower frame 80 and the support rotary 16 are firmly fixed so as to support the rotation of the outer rotary 12 and the inner rotary 14.

The rotary can beading apparatus 1 includes a plurality of arms 20 extending in radial direction and arranged along the circumference of the rotary 10 and so as to rotate together with the rotary 10. According to the embodiment, eight arms 20 installed at the outer rotary 12 at equal intervals along the circumferential direction are exemplified.

A spindle support 21 is provided at the arm 20. The spindle support 21 rotatably supports the spindle 30 through a bearing 22. The spindle 30 is rotatably installed at the spindle support 21 around the rotary axis 301.

The spindle 30 includes a cylindrical housing 31 extending vertically, a sleeve 33 inserted in the housing 31, and a shaft 34 extending vertically and inserted in the sleeve 33.

The housing 31 and the sleeve 33 are fixed as a single body to rotate together. The shaft 34 is rotationally constrained to the sleeve 33 and rotates together with the sleeve 33. The shaft 34 is inserted to be axially slidable relative to the sleeve 33. According to the embodiment, the shaft 34 having a substantially regular hexagonal cross-section and the sleeve 33 provided with a hole corresponding to the shape of the shaft 34 are exemplified, which allows the shaft 34 and the sleeve 33 to be mutually rotationally constrained while enabling the shaft 34 to be axially slidable relative to the sleeve 33.

A head 37 is connected to the lower end portion of the shaft 34. The head 37 is connected to the shaft 34 to rotate and move up and down together with the shaft 34. The head 37 supports the open end provided at the upper end portion of the sidewall member of the can 2, transmits rotational force to the can 2, and rotates together with the can 2.

An upper frame 70 is provided above the rotary 10. The upper frame 70 is firmly fixed. An upper rail cam 71 having a head height profile extending in circumferential direction with respect to the center axis 101 of the rotary 10 is installed under the upper frame 70.

A shaft support member 24 is installed at the upper end portion of the shaft 34 to rotatably support the shaft 34 while constraining the shaft 34 in axial direction of the shaft 34.

A shaft lifting guide 23 is installed at the arm 20 to guide and support the lifting of the shaft support member 24. The shaft support member 24 may be moved up and down along the shaft lifting guide 23, and accordingly, the shaft 34 may also be moved up and down together.

At the upper portion of the shaft support member 24, a head cam follower 35 is installed to be moved up and down together with the shaft 34 of the spindle 30. The head cam follower 35 revolves around the center axis 101 of the rotary 10 and follows the head height profile, and accordingly, the shaft 34 and the head 37 connected to the lower end portion of the shaft 34 are moved up and down together.

An upper rail 77 extending in circumferential direction with respect to the center axis 101 is further installed under the upper frame 70. In addition, a head roller 39 moving up and down together with the shaft 34 of the spindle 30 and following the upper rail 77 is further installed above the shaft support member 24.

The upper rail 77 and the upper rail cam 71 are provided at radially different positions of the center axis 101. According to the embodiment, the upper rail 77 disposed radially inner than the upper rail cam 71 is exemplified.

Similarly, the head roller 39 and the head cam follower 35 are provided at radially different positions of the center axis 101. According to the embodiment, the head roller 39 disposed radially inner than the head cam follower 35 is exemplified.

In the head lift section along circumferential direction, the height of the head 37 is determined by the upper rail cam 71, and in the head travel section that does not overlap with the head lift section along circumferential direction, the height of the head 37 is determined by the upper rail 77.

For example, in the head lift section, the head cam follower 35 is in contact with the upper rail cam 71 and reflects the head height profile to the height of the head 37, and in the head travel section, the head roller 39 is in contact with the upper rail 77 and maintains the height of the head 37 constant.

The rotary can beading apparatus 1 includes a plurality of can tables 60 extending in radial direction and arranged along the circumference of the rotary 10 and so as to rotate together with the rotary 10. According to the embodiment, eight can tables 60 installed at the outer rotary 12 at equal intervals along the circumferential direction are exemplified.

The outer circumference of the outer rotary 12 is provided with a table lifting guide 121 extending vertically, and the eight can tables 60 are guided to move up and down along the table lifting guide 121.

A can support 61 is provided at the radial edge of the can table 60 so as to rotate with the can table 60 about the center axis 101.

The can support 61 is aligned with the head 37 vertically. The can support 61 is installed to freely rotate with respect to the can table 60 about the rotary axis 301 of the head 37. The can support 61 rotates in response to the rotational force of the head 37.

A lower rail cam 81 is installed at the lower frame 80. The lower rail cam 81 has a can height profile that extends in circumferential direction with respect to the center axis 101 of the rotary 10.

A can cam follower 62 moving up and down together with the can table 60 is installed under the can table 60. The can cam follower 62 revolves around the center axis 101 of the rotary 10 and follows the can height profile, and accordingly, the can table 60 moved up and down together, thereby adjusting the height of the can support 61.

A lower rail 85 extending in circumferential direction with respect to the center axis 101 is further installed at the lower frame 80. In addition, a can roller 63 moving up and down together with the can table 60 and following the lower rail 85 is further installed under the can table 60.

The lower rail 85 and the lower rail cam 81 are provided at radially different positions of the center axis 101. According to the embodiment, the lower rail 85 disposed radially inner than the lower rail cam 81 is exemplified.

Similarly, the can roller 63 and the can cam follower 62 are provided at radially different positions of the center axis 101. According to the embodiment, the can roller 63 disposed radially inner than the can cam follower 62 is exemplified.

In the can lifting section along circumferential direction, the height of the can table 60 may be determined by the lower rail cam 81, and in the can travel section that does not overlap with the can lifting section along circumferential direction, the height of the can table 60 is determined by the upper rail 77.

For example, in the can lifting section, the can cam follower 62 is in contact with the lower rail cam 81 and reflects the can height profile to the height of the can support 61, and in the can travel section, the can roller 63 is in contact with the lower rail 85 and maintains the height of the can support 61 constant.

The rotary can beading apparatus 1 includes a beading knife 40 installed at each of the arms 20.

The beading knife 40 is rotatably supported by a knife support axis 42 installed at the knife support 41. The beading knife 40 is extrapolated to the knife support axis 42 so that relative movement in axial direction is constrained while relative rotation is allowed with respect to the knife support axis 42.

The arm 20 supports the knife support 41 so that the knife support 41 may move toward or away from the rotary axis 301 of the head 37. According to the embodiment, the knife movement guide 25 provided at the arm 20 supporting the knife support 41 to slide in radial direction of the rotary axis 301 is exemplified. The knife movement guide 25 is provided at the arm 20 inner than the spindle support 21 in radial direction of the center axis 101.

A knife rail cam 17 having a knife radial position profile 172 and extending in circumferential direction with respect to the center axis 101 is installed above the support rotary 16. For example, the knife radial position profile 172 may have a trajectory of a circle eccentrically arranged with respect to the center axis 101.

The knife movement guide 25 is provided at the arm 20 outer than the knife rail cam 17 in radial direction of the center axis 101.

A knife cam follower 43 moving in radial direction with respect to the rotary axis 301 together with the beading knife 40 and following the knife radial position profile 172 for adjusting the radial distance of the beading knife 40 with respect to the rotary axis 301 of the spindle 30 is installed at the knife support 41,.

The rotary can beading apparatus 1 includes a support roller 50 installed at each of the arms 20 to face the beading knife 40 with the rotary axis 301 therebetween.

The support roller 50 is rotatably supported by a roller support axis 52 installed at the roller support 51. The support roller 50 is extrapolated to the roller support axis 52 so that relative movement in axial direction with respect to the roller support axis 52 is constrained while relative rotation is allowed.

The arm 20 supports the roller support 51 so that the roller support 51 may move toward or away from the rotary axis 301 of the head 37. According to the embodiment, the arm 20 provided with a roller movement guide 26 supporting the roller support 51 allowing the roller support 51 to slide in radial direction of the rotary axis 301 is exemplified. The roller movement guide 26 is provided at the arm 20 outer than the spindle support 21 in radial direction of the center axis 101. For reference, the shaft lifting guide 23 is provided between the spindle support 21 and the roller movement guide 26 in radial direction.

The lower frame 80 is provided with a middle table 86 extending to a height equal to the head 37 at a position outer than the head 37 with respect to the center axis 101.

A support rail cam 87 having a support roller radial position profile 871 extending in circumferential direction with respect to the center axis 101 is installed on the middle table 86. For example, the support roller radial position profile 871 may have an arc-shaped trajectory eccentrically arranged with respect to the center axis 101.

The roller movement guide 26 is provided at the arm 20 inner than the support rail cam 87 in radial direction of the center axis 101.

A support cam follower 53 moving in radial direction with respect to the rotary axis 301 together with the support roller 50 and following the support roller radial position profile 871 to adjust the radial distance of the support roller 50 with respect to the rotary axis 301 of the spindle 30 is installed at the roller support 51.

The rotary can beading apparatus 1 includes a plurality of spindle drive supports 141 extending in radial direction and arranged along the circumference of the rotary 10 to rotate together with the rotary 10. According to the embodiment, eight spindle drive supports 141 installed above the inner rotary 14 at equal intervals along the circumferential direction are exemplified. The spindle drive support 141 is aligned with the arm 20 in radial direction of the center axis 101.

A spindle drive 143 is installed on the spindle drive support 141. The spindle drive 143 is disposed radially inner than the spindle 30 with respect to the center axis 101.

The spindle drive 143 includes: a drive motor 145 generating a rotational force; and a drive gear 147 rotated by the drive motor 145. The rotation axis of the drive gear 147 is arranged parallel to the rotation axis of the spindle 30. A driven gear 32 engaged with the drive gear 147 is provided on the housing 31 of the spindle 30 to rotate together with the housing 31. The spindle drive 143 rotates the spindle 30 in a section where rotation of the spindle 30 is required in circumferential direction of the rotary 10.

The rotary can beading apparatus 1 undergoes wear in the bearing 22 or beading knife 40 over time, and calibration is required to correct the same. Furthermore, the spindle 30 that rotates all heads 37 also undergoes wear and deformation over time.

According to the present invention, the dimensions of cans after beading are measured and stored as data, and the trends in the changing of such data are analyzed. Accordingly, it is possible to determine the forming error that occurs due to common wear of all spindles 30 and the forming error that occurs due to wear of the bearing 22 or beading knife 40 of an individual head 37.

The automatic calibration system of the rotary can beading apparatus 1 classifies the data trends described above into those requiring simultaneous calibration for all heads 37 and those requiring individual calibration, and calculates the required calibration level for each.

The automatic calibration system then performs automatic calibration based on the above-described calculation results.

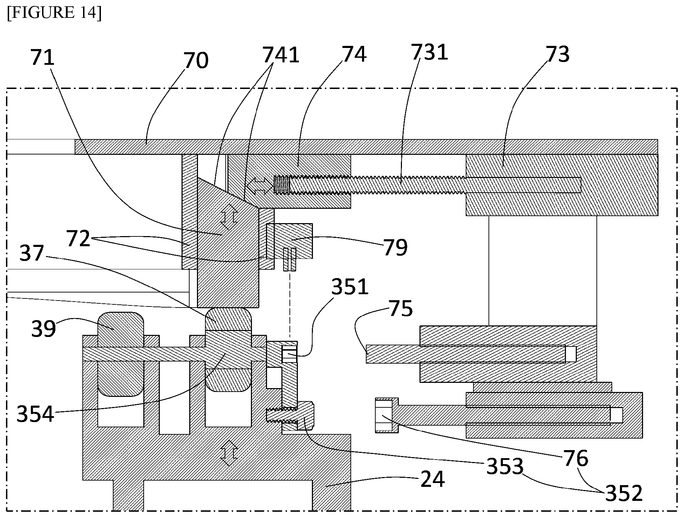

Referring to FIG. 14, to enable fine calibration of the heights of all heads 37, the rotary can beading apparatus 1 operates the upper servo motor 73 installed on the upper frame 70 to adjust the height of the upper rail cam 71. Since the upper rail cam 71 is to be followed by the head cam followers 35 of all spindles 30, adjusting the vertical height of the upper rail cam 71 simultaneously calibrates the heights of all heads 37.

Here, when the elevation direction of the upper rail cam 71 is determined by the rotational direction of the upper servo motor 73, and the elevation height of the upper rail cam 71 is determined by the number of rotations of the upper servo motor 73, the rotational direction and number of rotations of the upper servo motor 73 required for height calibration of all heads 37 are calculated, and the upper servo motor 73 is controlled based on the calculated values, thereby enabling precise height calibration of the all heads 37.

A monitoring unit 79 that acquires height information of the head 37 may be installed at the upper frame 70. The monitoring unit 79 may detect the height of the head 37 using a vision inspection method or various other methods. When the height of the upper rail cam 71 changes due to the upper servo motor 73, the height of the head cam follower 35 also changes accordingly. The monitoring unit 79 detects and verifies the height of the head cam follower 35, enabling more precise calibration.

The upper rail cam 71 is movably installed at the upper frame 70, and the upper servo motor 73 is also installed at the same upper frame 70. Accordingly, accurate height calibration of the upper rail cam 71 may be achieved.

The upper frame 70 is equipped with an upper rail elevating guide 72 that guides the elevation of the upper rail cam 71. The upper rail cam 71 is restricted from moving in the radial and circumferential directions with respect to the upper rail elevating guide 72 while being permitted to move up and down.

The upper servo motor 73 rotates the ball screw 731 at a controlled number of rotations, and the slider 74 in a form of a ball nut coupled to the ball screw 731 moves forward and backward along the lengthwise direction of the ball screw 731 in conjunction with upward and downward motions of the upper rail cam 71.

The slider 74 and the upper rail cam 71 are provided with a pair of sliding inclined surfaces 741 having vertically varying heights with respect to the lengthwise direction of the ball screw 731. The forward and backward motions may be in conjunction with the upward and downward motions as the pair of sliding inclined surfaces 741 slide. According to this, the sliding distance of the slider 74 is proportional to the elevation distance of the upper rail cam 71. Furthermore, the sliding distance of the slider 74 is determined by the number of rotations of the servo motor. Accordingly, the number of rotations of the servo motor may determine the elevation distance of the upper rail cam 71.

The automatic calibration may also be applied to the height of the can. The height of the can may also change due to wear of the bearing 22 of the can support 61, which rotates freely with respect to the can table 60, and wear of the can cam follower 62.

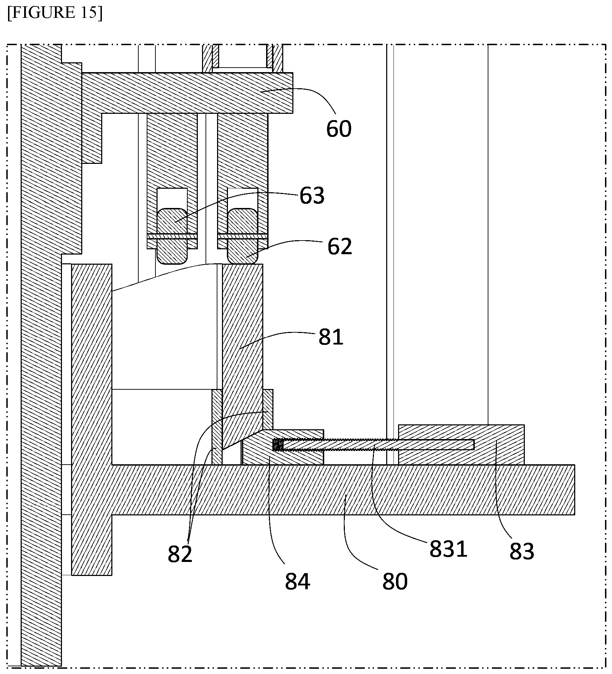

Referring to FIG. 15, the rotary can beading apparatus 1 operates the lower servo motor 83 installed at the lower frame 80 to adjust the height of the lower rail cam 81, thereby enabling fine calibration of the height of the can support 61. Since the lower rail cam 81 is to be followed by the can cam followers 62 of all can tables 60, adjusting the vertical height of the lower rail cam 81 simultaneously calibrates the heights of all can supports 61. The lower rail cam 81 adjusts the height by operating the lower servo motor 83. Such calibration principle is similar to that of the upper servo motor 73. Therefore, a detailed description is not given.

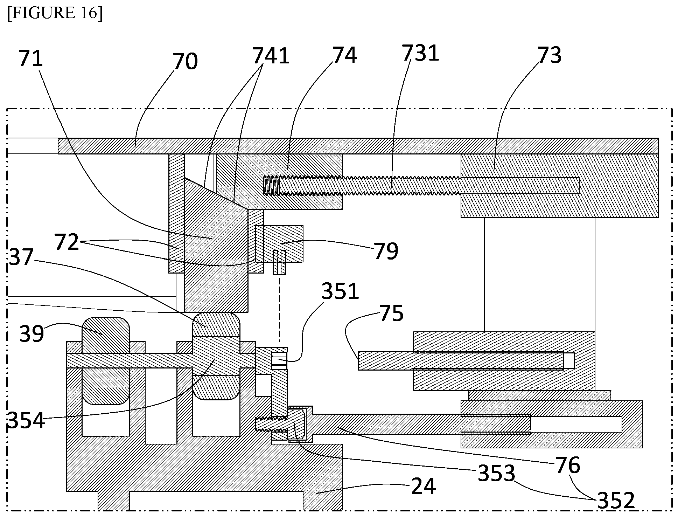

Hereinafter, with reference to FIGS. 16 to 22, the structure for adjusting the height of individual head 37 will be described.

As shown in FIG. 14, an adjusting servo motor 75 is installed at a predetermined location of the upper frame 70 to adjust the height of an individual head 37. Accordingly, a head 37 requiring individual height calibration may be moved to the position where the adjusting servo motor 75 is installed by rotating the rotary 10.

The relative height of the head cam follower 35 with respect to the shaft 34 may be adjusted by the rotation of the adjustment shaft 351, wherein the relative height changes depending on the rotation angle of the adjustment shaft 351. That is, the relative height of the head cam follower 35 with respect to the shaft support member 24 is adjusted according to the rotation angle of the adjustment shaft 351.

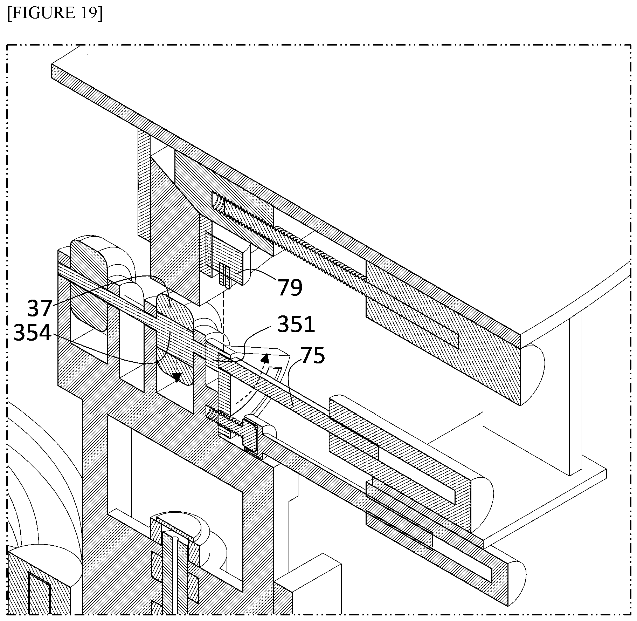

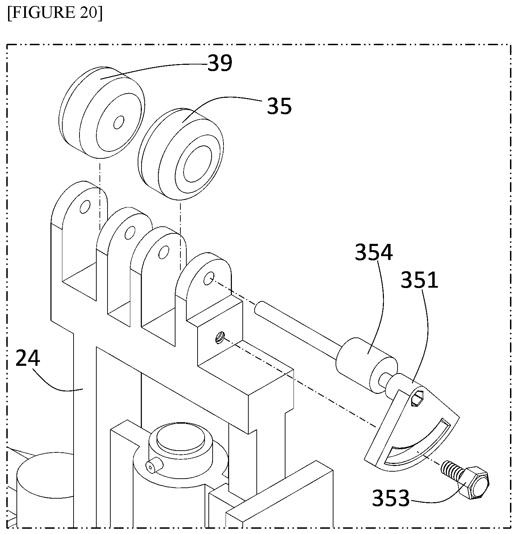

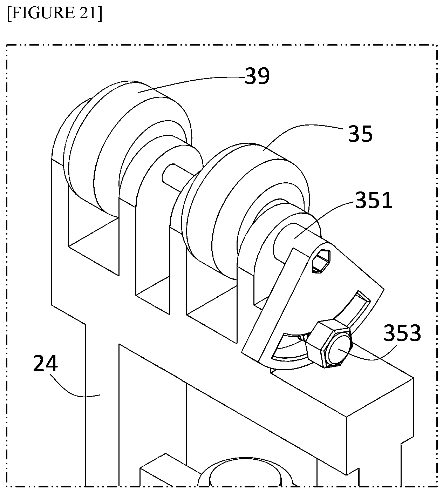

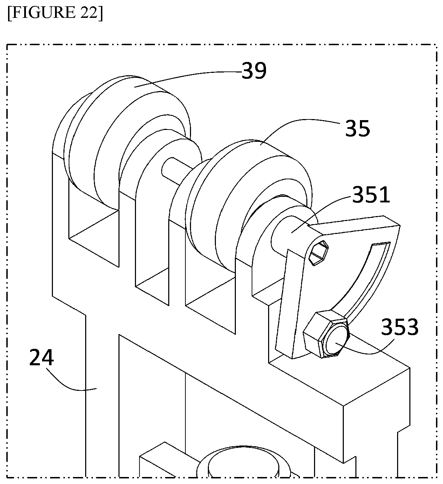

For example, as shown in FIGS. 21 and 22, the adjustment shaft 351 may rotate up to 90 degrees. Rotating the adjustment shaft 351 45 degrees to the left relatively raises the head cam follower 35, and rotating the adjustment shaft 351 45 degrees to the right relatively lowers the head cam follower 35. Accordingly, as shown in FIGS. 19 and 20, the adjusting servo motor 75 at a position retracted from the adjustment shaft 351 is brought close to the adjustment shaft 351 to be fastened so as to be mutually and rotationally constrained, and the rotation angle of the adjustment shaft 351 is accurately controlled by precisely controlling the rotation angle of the adjusting servo motor 75.

The angular position of the adjustment shaft 351 is in conjunction with to the elevation of the head cam follower 35. Therefore, when the position of the head cam follower 35 is adjusted by the adjustment shaft 351, the adjustment shaft 351 must be fixed. As a result, the adjustment shaft 351 may be fixed to allow or restrict rotation by a locking controller 352.

The locking controller 352 is also required to operate automatically. To automatically control the operation of the locking controller 352, the locking controller according to the embodiment includes: a locking nut 353 locking or unlocking the adjustment shaft 351 depending on the rotational direction; and a nut runner 76 installed so as to be accessible and retractable with respect to the locking nut 353 to rotate the locking nut 353.

Accordingly, the locking and unlocking operations of the locking nut 353 may also be automated by the nut runner 76, and the adjustment shaft 351 may also be precisely adjusted by precisely controlling the rotational direction and number of rotations of the adjusting servo motor 75.

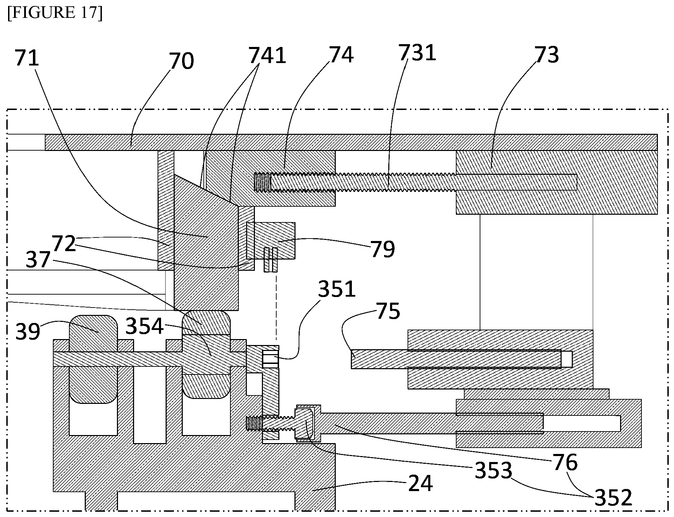

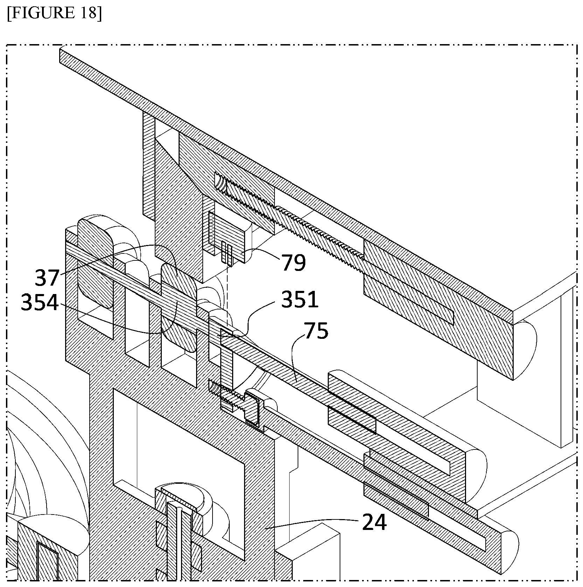

According to this, first, as shown in FIG. 16, the nut runner 76 approaches the locking nut 353, and as shown in FIG. 17, the locking nut 353 is unlocked, and as shown in FIG. 18, the rotational axis of the adjusting servo motor 75 is engaged with the adjustment shaft 351 so as to be rotationally constrained, and as shown in FIG. 19, the adjustment shaft 351 is rotated by the adjusting servo motor 75 by the required amount to adjust the position of the head cam follower 35 to the calibration position, and, the locking nut 353 is locked again with the nut runner 76 with the adjusting servo motor 75 engaged with the adjustment shaft 351 so as to automatically adjust the height of the head cam follower 35.

Once the above automatic calibration is complete, the can may be molded and the dimensions thereof are measured to quickly verify that the calibration was performed as intended.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A rotary can beading apparatus, comprising:
a rotary rotating about a center axis;
a plurality of arms arranged along a circumference of the rotary and extending in radial direction, the plurality of arms rotating with the rotary;
a head rotatably installed about a rotary axis at each of the plurality of arms to be slidable in axial direction;
a beading knife installed on each of the plurality of arms so as to be movable toward or away from the rotary axis;
a support roller disposed opposite to the beading knife with the rotary axis interposed therebetween;
a first rail cam having a first height profile extending in circumferential direction with respect to the center axis; and
a first cam follower moving up and down together with the head and adjusting a height of the head by following the first height profile,
wherein a height of the first rail cam is adjusted by an operation of a first servo motor.

2. The rotary can beading apparatus of claim 1, wherein an elevation direction of the first rail cam is determined by a rotational direction of the first servo motor, and an elevation height of the first rail cam is determined by a number of rotations of the first servo motor.

3. The rotary can beading apparatus of claim 1, further comprising a monitoring unit acquiring height information of the head.

4. The rotary can beading apparatus of claim 1, wherein the first rail cam is installed at a first frame to be vertically movable, and the first servo motor is installed at the first frame.

5. The rotary can beading apparatus of claim 4, wherein the first frame comprises a first rail elevating guide guiding an elevation of the first rail cam, and
wherein the first servo motor rotates a ball screw at a controlled number of rotations, and a slider in a form of a ball nut coupled to the ball screw moves forward and backward along a lengthwise direction of the ball screw in conjunction with upward and downward motions of the first rail cam.

6. The rotary can beading apparatus of claim 5, wherein the slider and the first rail cam are provided with a pair of sliding inclined surfaces having vertically varying heights with respect to the lengthwise direction of the ball screw, and
forward and backward motions are in conjunction with the upward and downward motions as the pair of sliding inclined surfaces slide.

7. The rotary can beading apparatus of claim 1, further comprising: a plurality of can tables extending in radial direction and arranged along the circumference of the rotary so as to rotate with the rotary;
a can support provided on a radially outer side of each of the plurality of can tables and installed to rotate about the rotary axis with respect to the plurality of can tables;
a second rail cam having a second height profile extending in the circumferential direction with respect to the center axis; and
a second cam follower moving up and down together with the can support and adjusting a height of the can support by following the second height profile,
wherein a height of the second rail cam is adjusted by an operation of a second servo motor.

8. The rotary can beading apparatus of claim 7, wherein an elevation direction of the second rail cam is determined by a rotational direction of the second servo motor, and an elevation height of the second rail cam is determined by a number of rotations of the second servo motor.

9. The rotary can beading apparatus of claim 7, wherein the rotational direction and the number of rotations of the second servo motor are complementary to the rotational direction and the number of rotations of the first servo motor, respectively.

10. The rotary can beading apparatus of claim 7, wherein the second rail cam is installed at a second frame to be vertically movable, and
wherein the second servo motor is installed at the second frame.

11. The rotary can beading apparatus of claim 1, wherein a relative height with respect to the head of the first cam follower is adjusted by a rotation of an adjustment shaft, the relative height changing depending on a rotation angle of the adjustment shaft,
the rotation of the adjustment shaft is locked or unlock by a locking controller, and
the rotation angle of the adjustment shaft is adjusted by a third servo motor mounted so as to be accessible and retractable relative to the adjustment shaft.

12. The rotary can beading apparatus of claim 11, wherein the locking controller comprises: a locking nut locking or unlocking the adjustment shaft depending on a rotational direction; and a nut runner installed so as to be accessible and retractable with respect to the locking nut to rotate the locking nut.

13. The rotary can beading apparatus of claim 11, wherein a third servo motor is installed at a first frame.

14. The rotary can beading apparatus of claim 12, wherein the nut runner is installed at the first frame.
